# EUROPÄISCHE PATENTSCHRIFT

(11) **EP 2 998 719 B1**
(45) Veröffentlichungstag und Bekanntmachung des Hinweises auf die Patenterteilung: **07.11.2018**
(21) Anmeldenummer: 15184186.3
(22) Anmeldetag: 08.09.2015
(51) Int. Cl.: G01M 15/02, G01M 15/05, G01M 15/12, G01M 15/04

(54) **VERFAHREN ZUM TESTEN DES VERHALTENS EINER BRENNKRAFTMASCHINE**
METHOD FOR TESTING THE BEHAVIOUR OF A COMBUSTION ENGINE
PROCEDE D'ESSAI DU COMPORTEMENT D'UN MOTEUR A COMBUSTION INTERNE

(30) Priorität: 10.09.2014 AT 506222014
(43) Veröffentlichungstag der Anmeldung: 23.03.2016
(73) Patentinhaber: Tectos GmbH, 8054 Graz (AT)
(72) Erfinder: HÖFLER, Dieter, 8020 GRAZ (AT)
(74) Vertreter: Babeluk, Michael

(56) Entgegenhaltungen:
- JP-A- S56 132 438
- JP-B2- 3 671 565
- US-A1- 2010 050 759
- US-A1- 2014 019 081
- A J Martyr ET AL: "Engine Testing: Theory and Practice (3rd Edition)" In: A . J. Martyr: "Engine Testing: Theory and Practice (3rd Edition)", 1. Januar 2007 (2007-01-01), Butterworth-Heinemann, XP055248891, * See section "Control for transient or dynamic engine testing", page 239-241 *

## Beschreibung

Die Erfindung betrifft ein Verfahren zum Testen des Verhaltens einer Brennkraftmaschine mit Start-Stopp-System während eines Startvorganges oder Stoppvorganges der Brennkraftmaschine, mit einem Prüfstand welcher einen elektrischen Dynamometer und eine mit dem Dynamometer über eine Welle verbundene Kupplungseinheit mit zumindest einer schaltbaren Kupplung aufweist, wobei die Kupplungseinheit mit einer Kurbelwelle der Brennkraftmaschine verbunden wird.

Brennkraftmaschinen von Kraftfahrzeugen werden aufgrund der immer strenger werdenden Abgasgesetzgebung vermehrt mit Start-Stop-Funktionen ausgestattet. Dabei wird die Brennkraftmaschine bei Stillstand des Fahrzeuges abgeschalten und bei Bedarf wieder gestartet. Dies geschieht bei Betätigen des Gaspedales durch einen eigenen Starter.

Dieser Vorgang muss bei der Entwicklung von Brennkraftmaschinen mitberücksichtigt werden und deshalb realistisch auch am Motorprüfstand abgebildet werden können.

Es ist bekannt, eine Start-Stopp Simulation am Prüfstand entweder über eine Simulation des Startes durch den Dynamometer des Prüfstandes oder durch eine Fahrzeugkupplung die über Aktuatorik betätigt wird, durchzuführen.

Aus der US 2010/0050759 A1 ist ein Prüfstand mit einem Dynamometer bekannt, welcher mit einer Kurbelwelle einer Brennkraftmaschine verbindbar ist. Eine Kupplungseinheit ist mit dem Dynamometer über eine Welle verbunden, wobei die Kupplungseinheit zumindest eine schaltbare Kupplung zum Verbinden des Dynamometers mit der Brennkraftmaschine und zum Trennen des Dynamometers von der Brennkraftmaschine aufweist. Lager und Kupplung sind durch separate Elemente gebildet.

In der Veröffentlichung A J Martyr et al: "Engine Testing: Theorie and Practice (3rd Edition)", 1. Januar 2007, XP055248891, ist auf den Seiten 239 bis 241 im Abschnitt "Control for transient or dynamic engine testing" offenbart, mit einem Dynamometer eine bestimmte Drehmoment-Drehzahl-Charakteristik zu reproduzieren und die Charakteristik von Gangwechselvorgängen zu simulieren. Während des Auskuppelns wird ein Null-Drehmoment vom Dynamometer auf die Brennkraftmaschine gelegt, was erfordert, dass der Drehzahl der freien Brennkraftmaschinendrehzahl gefolgt wird. Das erforderliche Beschleunigungs- und Verzögerungsmoment ist proportional zur Trägheit des Dynamometers und der Drehzahländerung.

Die JP 2003-057152 A offenbart eine Vorrichtung zum Testen des Startverhaltens einer Brennkraftmaschine, wobei ein Startermodellteil verwendet wird, welcher eine Startercharakteristk simuliert. Die reine Simulation des Startvorganges hat aber den Nachteil, dass durch die zusätzlichen Massen und Trägheiten sowie den Totzeiten des Reglers eine Verfälschung des Vorganges hervorgerufen wird.

Bei der Verwendung einer Fahrzeugkupplung ist zwar der Einfluss des Prüfstandes nicht vorhanden, es kommt aber aufgrund des Verschleisses der Kupplung zu einer Abweichung in der Reproduzierbarkeit. Außerdem ist es nicht möglich, unterschiedliche Kupplungskennlinien zu simulieren.

Aufgabe der Erfindung ist es, die genannten Nachteile zu vermeiden und auf einfache und genaue Weise das Verhalten einer Brennkraftmaschine während eines Start- oder Stoppvorganges zu erfassen.

Erfindungsgemäß kann das Verhalten der Brennkraftmaschine während eines Startvorganges der Brennkraftmaschine dadurch getestet werden, dass die Brennkraftmaschine bei geöffneter Kupplung gestartet wird, dass der Dynamometer auf Synchrondrehzahl mit der Brennkraftmaschine gebracht wird, dass bei Erreichen der Synchrondrehzahl die Kupplung geschlossen wird, und dass nach dem Schließen der Kupplung durch den Dynamometer eine sich schließende Fahrzeugkupplung simuliert wird, wobei durch den Dynamometer ein Lastmoment auf die Welle aufgebracht wird, welches der Kupplungskennlinie einer sich schließenden Fahrzeugkupplung entspricht, wobei während des Startvorganges in der Kupplungseinheit zumindest ein Messwert gemessen und einer Betätigungseinheit und/oder einer Automatisierungseinheit übermittelt wird, und wobei der Dynamometer und/oder die Betätigungseinheit durch eine Automatisierungseinheit auf der Basis eines Start/Stopp-Simulationsprogramms gesteuert werden.

Das Verhalten der Brennkraftmaschine während eines Stoppvorganges der Brennkraftmaschine kann dadurch getestet werden, dass durch den Dynamometer eine sich öffnende Fahrzeugkupplung simuliert wird, während die Brennkraftmaschine bei geschlossener Kupplung betrieben wird, wobei durch den Dynamometer eine Momentencharakteristik auf die Welle aufgebracht wird, welches der Kupplungskennlinie einer sich öffnenden Fahrzeugkupplung entspricht, dass die Drehzahl der Brennkraftmaschine mit der Drehzahl des Dynamometers synchronisiert wird, und dass nach der Synchronisation die Kupplung geöffnet wird und nach dem Öffnen der Kupplung die Brennkraftmaschine gestoppt wird, wobei während des Stoppvorganges in der Kupplungseinheit zumindest ein Messwert gemessen und einer Betätigungseinheit und/oder einer Automatisierungseinheit übermittelt wird, und wobei der Dynamometer und/oder die Betätigungseinheit durch eine Automatisierungseinheit auf der Basis eines Start/Stopp-Simulationsprogramms gesteuert werden.

Während des Start- oder Stoppvorganges wird der Kupplungszustand erfasst, indem in der Kupplungseinheit zumindest ein Messwert, vorzugsweise die Drehzahl der An- und/oder Abtriebsseite der Kupplung, die Lagertemperatur, das Drehmomentes und/oder Wellenschwingungen und/oder -beschleunigungen, gemessen wird.

Die Messwerte werden einer Betätigungseinheit oder einer Automatisierungseinheit übermittelt. Die Kupplung der Kupplungseinheit wird durch die Betätigungseinheit elektrisch oder hydraulisch betätigt. Die Steuerung des Dynamometers und/oder die Betätigungseinheit erfolgt durch eine Automatisierungseinheit auf der Basis eines Start/Stopp-Simulationsprogramms.

Das Verfahren kann durchgeführt werden mit einem Prüfstand zum Testen des Start-Stopp Verhaltens einer Brennkraftmaschine, mit einem mit einer Kurbelwelle der Brennkraftmaschine verbindbaren elektrischen Dynamometer und einer mit dem Dynamometer über eine Welle verbundenen Kupplungseinheit mit zumindest einer schaltbaren Kupplung zum Verbinden des Dynamometers mit der Brennkraftmaschine und zum Trennen des Dynamometers von der Brennkraftmaschine.

Erfindungsgemäß ist vorgesehen, dass die Kupplungseinheit zumindest ein Wellenlager aufweist, wobei das Wellenlager in die Kupplungseinheit integriert und dynamometerseitig angeordnet ist, dass der Dynamometer mit einem Automatisierungssystem verbunden ist und das Automatisierungssystem ein Start/Stopp-Simulationsprogramm aufweist, und dass die Kupplungseinheit zumindest einen Sensor zum Messen der Wellendrehzahl, der Lagertemperatur, des Drehmomentes und/oder von Wellenschwingungen aufweist.

Die Kupplungseinheit ist dabei möglichst nahe der Brennkraftmaschine angeordnet und wird vorzugsweise direkt mit der Brennkraftmaschine - ohne dazwischen angeordnetes Getriebe - verbunden.

Diese Anordnung ermöglicht ein reaktionsschnelles und starres Verbinden der Brennkraftmaschine mit dem Dynamometer des Prüfstandes.

Die Erfindung wird im Folgenden anhand der Figuren näher erläutert. Es zeigen:
- Fig. 1: einen Prüfstand zum Testen des Start-Stop Verhaltens einer Brennkraftmaschine;
- Fig. 2: die Verläufe der Drehzahlen und der Drehmomente während eines Startvorganges der Brennkraftmaschine; und
- Fig. 3: die Verläufe der Drehzahlen und der Drehmomente während eines Stoppvorganges der Brennkraftmaschine.

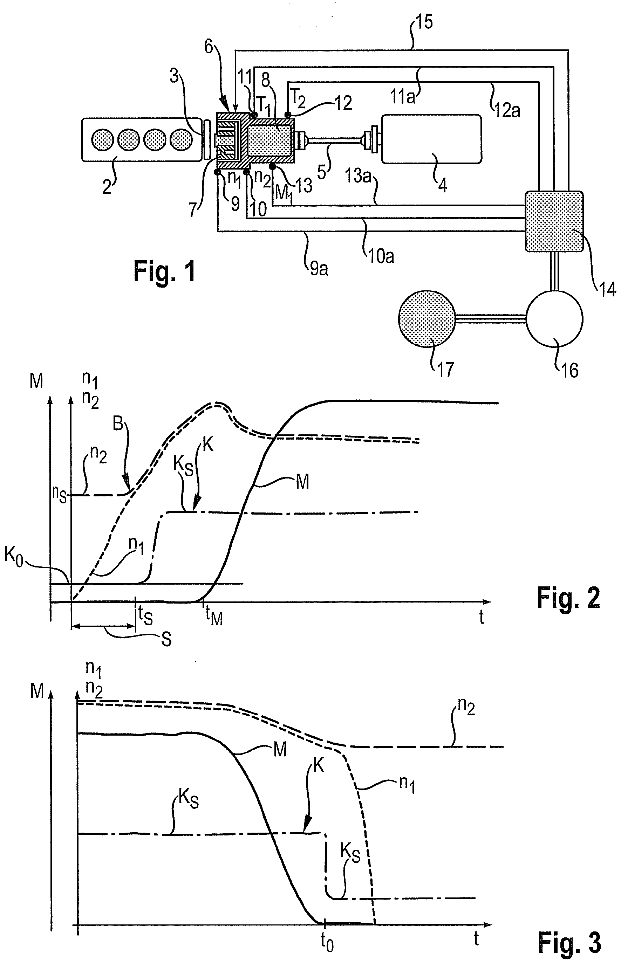

Die Fig. 1 zeigt einen Prüfstand 1 zum Testen des Start-Stop Verhaltens einer Brennkraftmaschine 2. Der Prüfstand 1 weist einen mit einer Kurbelwelle 3 der Brennkraftmaschine 2 verbindbaren elektrischen Dynamometer 4 und eine mit dem Dynamometer 4 über eine Welle 5 verbundene Kupplungseinheit 6 mit zumindest einer schaltbaren Kupplung 7 zum Verbinden und Trennen des Dynamometers 4 von der Brennkraftmaschine 2 auf. In die Kupplungseinheit 6 ist auf der Seite des Dynamometers 4 ein Wellenlager 8 integriert.

Weiters weist die Kupplungseinheit 6 Sensoren 9, 10 zum Messen der Drehzahlen n₁, n₂ beidseits - also an- und abtriebsseitig - der Kupplung 7, Sensoren 11, 12 zum Messen der Lagertemperaturen T₁, T₂, und eventuell zumindest einen Sensor 13 zum Messen des Drehmomentes M₁ auf. Die Sensoren 9, 10, 11, 12, 13 sind über Sensorleitungen 9a, 10a, 11a, 12a, 13a mit einer Betätigungseinheit 14 verbunden. In der Kuppplungseinheit 6 werden somit Messdaten des Kupplungszustandes, die Drehzahlen n₁, n₂ der Ein- und Abtriebsseite, sowie die Temperaturen T₁, T₂ der Lagerstellen gemessen und an die Betätigungseinheit 14 gemeldet. Gegebenenfalls kann dies um eine Momentenmessung M₁ und Messungen auftretender Beschleunigungen noch erweitert werden. Die Kupplung 7 der Kupplungseinheit wird durch die Betätigungseinheit 14 über eine Betätigungsleitung 15, beispielsweise elektrisch oder hydraulisch, betätigt. Anstelle der elektrischen Leitungen ist selbstverständlich auch eine leitungslose Fernübertragung der Messdaten und Betätigungsbefehle möglich. Die Betätigungseinheit 14 stellt die Verbindung zwischen einem Automatisierungssystem 16 des Prüfstandes 1 und der Kupplungseinheit 6 her. Das Automatisierungssystem 16 wird von einem Start/Stop-Simulationsprogramm 17 gesteuert.

Die Kupplungseinheit 6 erlaubt ein reaktionsschnelles und starres Verbinden der Brennkraftmaschine 2 mit dem Prüfstand 1. Die Kupplung 7 kann beispielsweise als Mehrscheiben-Trockenkupplung oder als Klauenkupplung ausgebildet sein. Die gesamte Kupplungseinheit 6 wird bevorzugt direkt mit der Brennkraftmaschine 2 - ohne dazwischenliegendes Getriebe - verbunden.

In Fig. 2 sind die Drehzahlen n₁, n₂ für die Brennkraftmaschine 2 und den Dynamometer 4, sowie eine vom Dynamometer 4 aufgebrachte Momentencharakteristik M für einen simulierten Startvorgang der Brennkraftmaschine 2 über der Zeit t aufgetragen. Mit der Linie K ist der Zustand der Kupplung 7 (Kupplung offen: K_{O}; Kupplung geschlossen K_{S}) angedeutet. Zur Simulation des Startvorganges der Brennkraftmaschine 2 bei der Start-Stopp Simulation wird bei Motorstart die Kupplung 7 geöffnet und die Brennkraftmaschine 2 startet ohne eine Verbindung mit dem Prüfstand 1. Gleichzeitig wird der durch eine elektrische Maschine gebildete Dynamometer 4 auf Synchrondrehzahl nₛ mit der Brennkraftmaschine 2 gebracht. Diese Phase ist mit Bezugszeichen S bezeichnet. Bei gewünschter Drehzahl nₛ der Brennkraftmaschine 2 wird die Kupplung 7 zum Zeitpunkt tₛ geschlossen, wodurch die Brennkraftmaschine 2 mit dem Prüfstand 1 verbunden wird. Mit Bezugszeichen B ist der Beginn der Verbrennung bezeichnet. Zu diesem Zeitpunkt tₛ wird die Brennkraftmaschine 2 nicht belastet. Das das Automatisierungssystem 16 steuernde Simulationsprogramm 17 legt nun zum Zeitpunkt t_{M} über den Dynamometer 4 eine eine Kupplungskennlinie simulierende Momentencharakteristik M als Last an die Brennkraftmaschine 2 an und simuliert somit das Verhalten des restlichen Fahrzeuges.

In Fig. 3 sind die Drehzahlen n₁, n₂ für die Brennkraftmaschine 2 und den Dynamometer 4, sowie eine vom Dynamometer 4 aufgebrachte Momentencharakteristik M für einen simulierten Stoppvorgang der Brennkraftmaschine 2 über der Zeit t aufgetragen. Mit der Linie K ist der Zustand der Kupplung 7 (Kupplung offen: K_{O}; Kupplung geschlossen K_{S}) angedeutet. Zur Simulation des Motorstopps wird bei geschlossener Kupplung 7 und gefeuert betriebener Brennkraftmaschine 2 zuerst durch das Simulationsprogramm 17 eine Kennlinie einer sich öffnenden Kupplung als Momenetencharakteristik M über den Dynamometer 4 eingebracht und die Motordrehzahl n₁ der Brennkraftmaschine 2 synchronisiert. Am Ende des Vorganges ist das Drehmoment M an der Kupplung 7 gleich null, die Drehzahlen n1 der Brennkraftmaschine 2 und des Dynamometers 4 sind gleich. Erst dann erfolgt zum Zeitpunkt t_{O} das Öffnen der Kupplung 7 und die Brennkraftmaschine 2 wird ohne Verbindung zum Prüfstand 1 gestoppt.

Der Vorteil dieser Methode liegt zum einen darin, dass auch Start-Stopp Vorgänge von Brennkraftmaschinen 2 mit Automatik- oder Doppelkupplungsgetrieben unabhängig vom Getriebe und ohne dessen Einfluss untersucht werden können. Zum anderen ermöglicht es bei Brennkraftmaschinen 2 mit Handschaltgetrieben eine sehr gute Reproduzierbarkeit von Einkuppelvorgängen, da es bei der Verwendung der fahrzeugeigenen Kupplungen während der Erprobung zu Verschleisserscheinungen kommen würde, welche das Ergebnis verfälschen könnten.

## Patentansprüche

1. Verfahren zum Testen des Verhaltens einer Brennkraftmaschine (2) mit Start-Stopp-System während eines Startvorganges der Brennkraftmaschine (2), mit einem Prüfstand (1) welcher einen elektrischen Dynamometer (4) und eine mit dem Dynamometer (4) über eine Welle (5) verbundene Kupplungseinheit (6) mit zumindest einer schaltbaren Kupplung (7) aufweist, wobei die Kupplungseinheit (6) mit einer Kurbelwelle (3) der Brennkraftmaschine (2) verbunden wird, **dadurch gekennzeichnet, dass** die Brennkraftmaschine (2) bei geöffneter Kupplung (7) gestartet wird, dass der Dynamometer (4) auf Synchrondrehzahl mit der Brennkraftmaschine (2) gebracht wird, dass bei Erreichen der Synchrondrehzahl die Kupplung (7) geschlossen wird, und dass nach dem Schließen der Kupplung (7) durch den Dynamometer (4) eine sich schließende Fahrzeugkupplung simuliert wird, wobei durch den Dynamometer (4) ein Lastmoment auf die Welle (5) aufgebracht wird, welches der Kupplungskennlinie einer sich schließenden Fahrzeugkupplung entspricht, wobei während des Startvorganges in der Kupplungseinheit (6) zumindest ein Messwert gemessen und einer Betätigungseinheit (14) und/oder einer Automatisierungseinheit (16) übermittelt wird, und wobei der Dynamometer (4) und/oder die Betätigungseinheit (14) durch eine Automatisierungseinheit (16) auf der Basis eines Start/Stopp-Simulationsprogramms (17) gesteuert werden.

2. Verfahren zum Testen des Verhaltens einer Brennkraftmaschine (2) mit Start-Stopp-System während eines Stoppvorganges der Brennkraftmaschine(2), mit einem Prüfstand (1) welcher einen elektrischen Dynamometer (4) und eine mit dem Dynamometer (4) über eine Welle (5) verbundene Kupplungseinheit (6) mit zumindest einer schaltbaren Kupplung (7) aufweist, wobei die Kupplungseinheit (6) mit einer Kurbelwelle (3) der Brennkraftmaschine (2) verbunden wird, **dadurch gekennzeichnet, dass** durch den Dynamometer (4) eine sich öffnende Fahrzeugkupplung simuliert wird, während die Brennkraftmaschine (2) bei geschlossener Kupplung (7) betrieben wird, wobei durch den Dynamometer (4) eine Momentencharakteristik auf die Welle (5) aufgebracht wird, welches der Kupplungskennlinie einer sich öffnenden Fahrzeugkupplung entspricht, dass die Drehzahl der Brennkraftmaschine (2) mit der Drehzahl des Dynamometers (4) synchronisiert wird, und dass nach der Synchronisation die Kupplung (7) geöffnet wird und nach dem Öffnen der Kupplung (7) die Brennkraftmaschine (2) gestoppt wird, wobei während des Stoppvorganges in der Kupplungseinheit (6) zumindest ein Messwert gemessen und einer Betätigungseinheit (14) und/ oder einer Automatisierungseinheit (16) übermittelt wird, und wobei der Dynamometer (4) und/oder die Betätigungseinheit (14) durch eine Automatisierungseinheit (16) auf der Basis eines Start/Stopp-Simulationsprogramms (17) gesteuert werden.

3. Verfahren nach Anspruch 1 oder 2, **dadurch gekennzeichnet, dass** während des Start- oder Stoppvorganges in der Kupplungseinheit (6) die Drehzahl (n₁, n₂) an der An- und/oder Abtriebsseite der Kupplung (7), zumindest eine Lagertemperatur (T₁, T₂), das Drehmoment (M₁) und/oder Wellenschwingungen und/oder -beschleunigungen gemessen wird/werden.

4. Verfahren nach einem der Ansprüche 1 bis 3, **dadurch gekennzeichnet, dass** die Kupplung (7) der Kupplungseinheit (6) durch die Betätigungseinheit (14) betätigt wird.

5. Verfahren nach einem der Ansprüche 1 bis 4, **dadurch gekennzeichnet, dass** die Welle (5) durch die Kupplungseinheit (6) gelagert wird.

6. Prüfstand (1) zum Testen des Start-Stopp Verhaltens einer Brennkraftmaschine (2), mit einem mit einer Kurbelwelle (3) der Brennkraftmaschine (2) verbindbaren elektrischen Dynamometer (4) und eine mit dem Dynamometer (4) über eine Welle (5) verbundene Kupplungseinheit (6) mit zumindest einer schaltbaren Kupplung (7) zum Verbinden des Dynamometers (4) mit der Brennkraftmaschine (2) und zum Trennen des Dynamometers (4) von der Brennkraftmaschine (2), zur Durchführung des Verfahrens nach einem der Ansprüche 1 bis 5, **dadurch gekennzeichnet, dass** die Kupplungseinheit (6) zumindest ein Wellenlager (8) aufweist, wobei das Wellenlager (8) in die Kupplungseinheit (6) integriert und dynamometerseitig angeordnet ist, dass der Dynamometer (4) mit einem Automatisierungssystem (16) verbunden ist und das Automatisierungssystem (16) ein Start/Stopp-Simulationsprogramm (17) aufweist, und dass die Kupplungseinheit (6) zumindest einen Sensor (9, 10, 11, 12, 13) zum Messen der Wellendrehzahl (n₁, n₂), der Lagertemperatur (T₁, T₂), des Drehmomentes (M₁) und/oder von Wellenschwingungen aufweist.

7. Prüfstand (1) nach Anspruch 6, **dadurch gekennzeichnet, dass** die Kupplungseinheit (6) mit einer Betätigungseinheit (14) verbunden ist.

8. Prüfstand (1) nach Anspruch 7, **dadurch gekennzeichnet, dass** die Betätigungseinheit (14) mit einem Automatisierungssystem (16) verbunden ist.

## Claims

1. Method for testing the behavior of an internal combustion engine (2) with a start-stop system during a starting process of the internal combustion engine (2), comprising a test stand (1) having an electric dynamometer (4) and a clutch unit (6) which is connected to the dynamometer (4) via a shaft (5) and comprises at least one switchable clutch (7), wherein the clutch unit (6) is connected to a crankshaft (3) of the internal combustion engine (2), **characterised in that** the internal combustion engine (2) is started with open clutch (7), that the dynamometer (4) is brought to synchronous speed with the internal combustion engine (2), that the clutch (7) is closed upon reaching the synchronous speed, and that after the closing of the clutch (7) a closing vehicle clutch is simulated by the dynamometer (4), wherein a load torque which corresponds to the clutch characteristic of a closing vehicle clutch is applied to the shaft (5) by the dynamometer (4), wherein during the starting process at least one measured value is measured in the clutch unit (6) and transmitted to an actuating unit (14) and/or an automation unit (16), and wherein the dynamometer (4) and/or the actuating unit (14) are controlled by an automation unit (16) on the basis of a start/stop simulation program (17).

2. Method for testing the behavior of an internal combustion engine (2) with a start-stop system during a stopping process of the internal combustion engine (2), comprising a test stand (1) having an electric dynamometer (4) and a clutch unit (6) which is connected to the dynamometer (4) via a shaft (5) and comprises at least one switchable clutch (7), wherein the clutch unit (6) is connected to a crankshaft (3) of the internal combustion engine (2), **characterised in that** an opening vehicle clutch is simulated by the dynamometer (4) while the internal combustion engine (2) is operated when the clutch (7) closed, wherein a torque characteristic which corresponds to the clutch characteristic of an opening vehicle clutch is applied to the shaft (5) by the dynamometer (4), that the speed of the internal combustion engine (2) is synchronized with the speed of the dynamometer (4), and that after synchronization, the clutch (7) is opened and, after the opening of the clutch (7), the internal combustion engine (2) is stopped, wherein at least one measured value is measured during the stopping process in the clutch unit (6) and transmitted to an actuating unit (14) and/or an automation unit (16), and wherein the dynamometer (4) and/or the actuating unit (14) is/are controlled by an automation unit (16) on the basis of a start/stop simulation program (17).

3. Method according to claim 1 or 2, **characterised in that** the speed (n₁, n₂) on the input and/or output side of the clutch (7), at least one bearing temperature (T₁, T₂), the torque (M₁) and/or shaft vibrations and/or accelerations is/are measured during the starting or stopping operation in the clutch unit (6).

4. Method according to one of the claims 1 to 3, **characterised in that** the clutch (7) of the clutch unit (6) is actuated by the actuating unit (14).

5. Method according to one of the claims 1 to 4, **characterised in that** the shaft (5) is supported by the clutch unit (6).

6. Test stand (1) for testing the start-stop behavior of an internal combustion engine (2), having an electric dynamometer (4) connectable to a crankshaft (3) of the internal combustion engine (2) and a clutch unit (6) which is connected to the dynamometer (4) via a shaft (5) and comprises at least one switchable clutch (7) for connecting the dynamometer (4) to the internal combustion engine (2) and for separating the dynamometer (4) from the internal combustion engine (2), for carrying out the method according to one of claims 1 to 5, **characterised in that** the clutch unit (6) has at least one shaft bearing (8), wherein the shaft bearing (8) is integrated in the clutch unit (6) and arranged on the dynamometer side, that the dynamometer (4) is connected to an automation system (16) and the automation system (16) has a start/stop simulation program (17), and that the clutch unit (6) has at least one sensor (9, 10, 11, 12, 13) for measuring the shaft speed (n1, n2), the bearing temperature (T1, T2), the torque (M1) and/or shaft vibrations.

7. Test stand (1) according to claim 6, **characterised in that** the clutch unit (6) is connected to an actuating unit (14).

8. Test stand (1) according to claim 7, **characterised in that** the actuating unit (14) is connected to an automation system (16).

## Revendications

1. Procédé permettant de tester le comportement d'un moteur à combustion interne (2) équipé d'un système de démarrage et d'arrêt pendant un processus de démarrage du moteur (2) comprenant un banc d'essai (1) qui comporte un dynamomètre électrique (4) et une unité d'accouplement (6) reliée au dynamomètre (4) par un arbre (5) et comprenant au moins un embrayage commutable (7), l'unité d'accouplement (6) étant reliée au vilebrequin (3) du moteur (2), **caractérisé en ce que**
le moteur (2) est démarré lorsque l'embrayage (7) est ouverte, le dynamomètre (4) est réglé à une vitesse de rotation en synchronisme avec le moteur (2), lorsque la vitesse de rotation synchrone a été atteinte, l'embrayage (7) est fermé, et après la fermeture de l'embrayage (7) l'embrayage du véhicule se fermant est simulé par le dynamomètre (4), et par le dynamomètre (4) est appliqué sur l'arbre (5) un couple de charge qui correspond à la caractéristique de l'embrayage du véhicule se fermant, pendant le processus de démarrage, dans l'unité d'accouplement (6) au moins une valeur de mesure étant mesurée, et transmise à une unité d'actionnement (14) et/ou à une unité d'automatisation (16), et le dynamomètre (4) et/ou l'unité d'actionnement (14) étant commandé(es) par une unité d'automatisation (16) sur le fondement d'un programme de simulation de démarrage et d'arrêt (17).

2. Procédé permettant de tester le comportement d'un moteur à combustion interne (2) équipé d'un système de démarrage et d'arrêt pendant un processus d'arrêt du moteur (2) comprenant un banc d'essai (1) qui comporte un dynamomètre électrique (4) et une unité d'accouplement (6) reliée au dynamomètre (4) par un arbre (5) et comportant au moins un embrayage commutable (7), l'unité d'accouplement (6) étant reliée au vilebrequin (3) du moteur (2),
**caractérisé en ce que**
l'embrayage du véhicule s'ouvrant est simulé par le dynamomètre (4), pendant que le moteur (2) est actionné avec l'embrayage (7) fermé, par le dynamomètre (4) est appliquée sur l'arbre (5), une caractéristique de couple qui correspond à la caractéristique de l'embrayage du véhicule s'ouvrant, la vitesse de rotation du moteur (2) est synchronisée avec la vitesse de rotation du dynamomètre (4), et, après la synchronisation l'embrayage (7) est ouvert et après l'ouverture de l'embrayage (7) le moteur (2) est arrêté, pendant le processus d'arrêt, dans l'unité d'accouplement (6) au moins une valeur de mesure étant mesurée et transmise à une unité d'actionnement (14) et/ou à une unité d'automatisation (16), et le dynamomètre (4) et/ou l'unité d'actionnement (14) étant commandée(s) par une unité d'automatisation (16) sur le fondement d'un programme de simulation de démarrage et d'arrêt (17).

3. Procédé conforme à la revendication 1 ou 2,
**caractérisé en ce que**
pendant le processus de démarrage ou d'arrêt on mesure dans l'unité d'accouplement (6) le nombre de tours (n₁, n₂) côté entrée et/ou côté sortie de l'embrayage (7), au moins une température de paliers (T₁, T₂), le couple de rotation (M₁) et/ou les oscillations de l'arbre et/ou les accélérations de l'arbre.

4. Procédé conforme à l'une des revendications 1 à 3,
**caractérisé en ce que**
l'on actionne l'embrayage (7) de l'unité d'accouplement (6) par l'intermédiaire de l'unité d'actionnement (14).

5. Procédé conforme à l'une des revendications 1 à 4,
**caractérisé en ce que**
l'arbre (5) est monté par l'intermédiaire de l'unité d'embrayage (6).

6. Banc d'essai (1) permettant de tester le comportement de démarrage d'arrêt d'un moteur à combustion interne (2) comprenant un dynamomètre électrique (4) pouvant être relié au vilebrequin (3) du moteur (2), ainsi qu'une unité d'accouplement (6) reliée au dynamomètre (4) par l'intermédiaire d'un arbre (5), et comportant au moins un embrayage commutable (7) pour relier le dynamomètre (4) au moteur (2) et séparer le dynamomètre (4) du moteur (2) permettant la mise en oeuvre du procédé conforme à l'une des revendications 1 à 5,
**caractérisé en ce que**
l'unité d'accouplement (6) comporte au moins un palier d'arbre (8), le palier d'arbre (8) est intégré dans l'unité d'accouplement (6) et monté côté dynamomètre, le dynamomètre (4) est relié à un système d'automatisation (16), et le système d'automatisation (16) comporte un programme de simulation de démarrage et d'arrêt (17), l'unité d'accouplement (6) comportant au moins un capteur (9, 10, 11, 12, 13) permettant de mesurer le nombre de tours (n₁, n₂) de l'arbre, la température (T₁, T₂) du palier, le couple de rotation (M₁) et/ou des oscillations de l'arbre.

7. Banc d'essai (1) conforme à la revendication 6,
**caractérisé en ce que**
l'unité d'accouplement (6) est reliée à une unité d'actionnement (14).

8. Banc d'essai (1) conforme à la revendication 7,
**caractérisé en ce que**
l'unité d'actionnement (14) est reliée à un système d'automatisation (16).
